# EUROPÄISCHE PATENTSCHRIFT

(11) **EP 3 260 803 B1**
(45) Veröffentlichungstag und Bekanntmachung des Hinweises auf die Patenterteilung: **16.10.2019**
(21) Anmeldenummer: 17177356.7
(22) Anmeldetag: 22.06.2017
(51) Int. Cl.: F01K 1/08, F28D 20/02, F28D 20/00, F01K 1/04

(54) **DAMPFSPEICHER**
STEAM STORAGE
ACCUMULATEUR DE VAPEUR

(30) Priorität: 23.06.2016 AT 505712016; 23.06.2016 AT 505702016
(43) Veröffentlichungstag der Anmeldung: 27.12.2017
(73) Patentinhaber: AIT Austrian Institute of Technology GmbH, 1220 Wien (AT)
(72) Erfinder: HOFMANN, Rene, 2340 Mödling (AT); ZAUNER, Christoph, 1200 Wien (AT); DUSEK, Sabrina, 2100 Korneuburg (AT); HENGSTBERGER, Florian, 3034 Maria Anzbach (AT)
(74) Vertreter: Gibler & Poth Patentanwälte KG

(56) Entgegenhaltungen:
- AT-A1- 508 992
- DE-A1- 4 121 462
- DE-A1- 10 043 533
- DE-A1- 10 108 152
- DE-A1-102006 044 789
- DE-A1-102011 001 273
- DE-A1-102011 121 471
- US-A- 4 696 338

## Beschreibung

Die Erfindung betrifft einen Dampfspeicher gemäß dem Oberbegriff des Patentanspruches 1.

Es sind Dampfspeicher bekannt, welche einen mit Siedewasser befüllten Speicherbehälter aufweisen, wobei sich in dem Speicherbehälter über dem Siedewasser Dampf ausbildet. Der Dampf wird bei Bedarf entnommen um beispielsweise Schwankungen in Dampfverbrauch bei industriellen Prozessen auszugleichen. Bei der Entnahme des Dampfes setzt eine Nachverdampfung aus dem Siedewasser ein, wodurch wieder Dampf bereitgestellt wird, aber der Druck und die Temperatur im Speicherbehälter gemäß den Gesetzen der Thermodynamik absinken. Die Wärmeenergie für die Nachverdampfung kann zumindest zum Teil direkt aus dem Siedewasser stammen. Der Dampfspeicher liefert gesättigten Dampf bei gleitendem Druck und ist damit nur für jenen Zeitraum verfügbar wo der Druck im Speicherbehälter oberhalb des Drucks im Prozessdampfnetz liegt.

Weiters sind Dampfspeicher bekannt, welche einen Latentwärmespeicher aufweisen. Der Latentwärmespeicher liefert ebenfalls einen Teil der zur Nachverdampfung benötigten Wärmeenergie, wobei der Latentwärmespeicher eine höhere Wärmespeicherdichte aufweist als das Siedewasser.

Ein Entleerungsvorgang des Dampfspeichers ist beendet, sobald der Druck des Dampfspeichers einen minimalen Entladungsdruck erreicht hat oder ein minimaler Füllstand erreicht wurde. Eine Wiederaufladung der Latentwärmespeicher mit Wärmeenergie erfolgt üblicherweise dadurch, dass neuer Dampf mit einer sehr hohen Temperatur in den Speicherbehälter eingeleitet wird, wobei ein Teil der Wärmeenergie dieses Dampfes von dem Latentwärmespeicher in Form von latenter Wärmeenergie gespeichert wird.

Aus der DE 10 2011 121 471 A1 ist ein Dampfspeicher für ein Kraftfahrzeug bekannt. Der Dampfspeicher ist mit einer losen Schüttung aus PCM-Kapseln gefüllt. Diese lose Schüttung wird durch das Fluid durchsetzt und durchströmt. In dem Dampfspeicher sind Wärmetauscher derart angeordnet, dass die Schüttung der PCM-Kapseln die Wärmetauscher umgibt.

Aus der US 4 696 338 A ist einen Wärmespeicher bekannt, bei welchem in einem Behälter ein flüssig-festes Phasenwechselmaterial sowie ein flüssig-gasförmiges Phasenwechselmaterial angeordnet sind.

Aus der DE 41 21 462 A1 ist ein Dampfspeicher bekannt, bei welchen Latentwärmespeicher freiliegend innerhalb des Speicherbehälters angeordnet sind. Aus der DE 10 2006 044 789 A1 ist ein als Rohrregister ausgebildeten Dampfspeicher bekannt, bei welchen ein Latentwärmespeicher die Rohre umgibt.

Aus der AT 508 992 A1 ist ein Wärmespeicher zum Speichern von Wärmeenergie von einer Solaranlage bekannt. Der Wärmespeicher weist innere Kammern mit Phasenwechselmaterialien unterschiedlicher Schmelztemperatur auf. Eine von der Solaranlage kommende Leitung führt nacheinander durch die Kammern.

Aus der DE 101 08 152 A1 ist ein Latentwärmespeicher mit einem Speicherbehälter bekannt, in welchem ein Wärmetauscher angeordnet ist.

Aus der DE 10 2011 001 273 A1 ist ein Speichertank für ein Energiespeichersystem bekannt, wobei in dem Speichertank Wärmetauscher sowie ein Heizsystem angeordnet ist.

Aus der DE 100 43 533 A1 ist ein Wärmespeicher bekannt, welcher dazu dient Wasser schnell auf eine bestimmte nutzbare Solltemperatur zu erhitzen. Der Wärmespeicher weist ein Druckgefäß , welches mit einem Mantel aus einem Latentwärmespeichermaterial umgeben.

Nachteilig daran ist, dass eine Wiederaufladung des Dampfspeichers mit Wärmeenergie während eines laufenden Betriebes problematisch ist, da es durch die notwendige hohe Temperatur des neu zugeführten Dampfes zu Spitzen und Schwankungen in der Temperatur und dem Druck des Dampfspeichers kommen kann. Dies erschwert die Prozessführung, da Druck und Temperatur bei der Entnahme voneinander abhängig sind. Weiters ist der Anlagenbetreiber mit schwankenden Prozess- und Strompreisen sowie variablen Produktionsfahrplänen und damit bedingter Energieversorgung konfrontiert.

Aufgabe der Erfindung ist es daher einen Dampfspeicher der eingangs genannten Art anzugeben, mit welchem die genannten Nachteile reduziert werden können, welcher leichter in einem industriellen Prozess integrierbar ist und eine höhere Effizienz ermöglicht.

Erfindungsgemäß wird dies durch die Merkmale des Patentanspruches 1 erreicht.

Dadurch ergibt sich der Vorteil, dass auch während des Entleerungsvorgangs des Dampfspeichers gezielt Wärmeenergie in diesen eingebracht werden kann, um einen Abfall des Druckes beziehungsweise der Temperatur hinauszuzögern, diese konstant zu halten oder zu einem Anstieg des Druckes beziehungsweise der Temperatur zu führen. Weiters ergibt sich dadurch der Vorteil, dass Wärme aus Strom zu Zeiten von billigen Strompreisen gespeichert werden kann, welche dann zur Zeiten eines erhöhten Wärmebedarfs des Produktionsprozesses diesem zur Verfügung gestellt wird. Durch geeignete Regelung kann eine zeitliche Entkopplung von Wärmeproduktion und Wärmeverbrauch, sowie die Erzeugung von Wärme durch Strom zu Zeiten niedriger Strompreise realisiert werden. Weiters kann Wärmenergie über die Heizeinrichtungen direkt den Latentwärmespeichern zugeführt werden, ohne dass dafür Dampf in den Speicherraum eingebracht werden muss. Dadurch kann die Wiederaufladung der Latentwärmespeicher mit latenter Wärmeenergie problemlos und laufend während des Betriebes erfolgen. Weiters ist es dadurch möglich, dass der Druck und die Temperatur während des Entleerungsvorgangs im Wesentlichen stabil gehalten werden kann und nicht mehr zwingend abfallen muss. Dadurch kann ein derartiger Dampfspeicher einfacher in einen komplexen industriellen Prozess eingesetzt werden. Weiters kann dadurch der Dampfspeicher kleiner ausgebildet werden, da weniger Volumen für die Wärmespeicherung benötigt wird, wodurch auch die Leistungsdichte und die Effizienz des Dampfspeichers erhöht wird.

Die Erfindung betrifft weiters ein Verfahren zum Betreiben eines Dampfspeichers gemäß dem Patentanspruch 14.

Aufgabe der Erfindung ist es daher weiters ein Verfahren zum Betreiben eines Dampfspeichers der eingangs genannten Art anzugeben, mit welchem die genannten Nachteile vermieden werden können, welches leichter in einem industriellen Prozess integrierbar ist und eine höhere Effizienz ermöglicht.

Erfindungsgemäß wird dies durch die Merkmale des Patentanspruches 14 erreicht.

Die Vorteile des Verfahrens entsprechen den Vorteilen des Dampfspeichers.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste bevorzugte Ausführungsform des Dampfspeichers im Schnitt;
Fig. 2 eine zweite bevorzugte Ausführungsform des Dampfspeichers im Schnitt;
Fig. 3 eine dritte bevorzugte Ausführungsform des Dampfspeichers im Schnitt;
Fig. 4 eine vierte bevorzugte Ausführungsform des Dampfspeichers im Schnitt;
Fig. 5 eine fünfte bevorzugte Ausführungsform des Dampfspeichers im Schnitt;
Fig. 6 eine sechste bevorzugte Ausführungsform des Dampfspeichers im Schnitt;
Fig. 7 eine siebente bevorzugte Ausführungsform des Dampfspeichers im Schnitt;
Fig. 8 ein Teil einer achten bevorzugten Ausführungsform des Dampfspeichers im Schnitt;
Fig. 9 ein Teil einer neunten bevorzugten Ausführungsform des Dampfspeichers im Schnitt;
Fig. 10 ein Teil einer zehnten bevorzugten Ausführungsform des Dampfspeichers im Schnitt;
Fig. 11 ein Teil einer elften bevorzugten Ausführungsform des Dampfspeichers im Schnitt; und
Fig. 12 eine zwölfte bevorzugte Ausführungsform des Dampfspeichers im Schnitt.

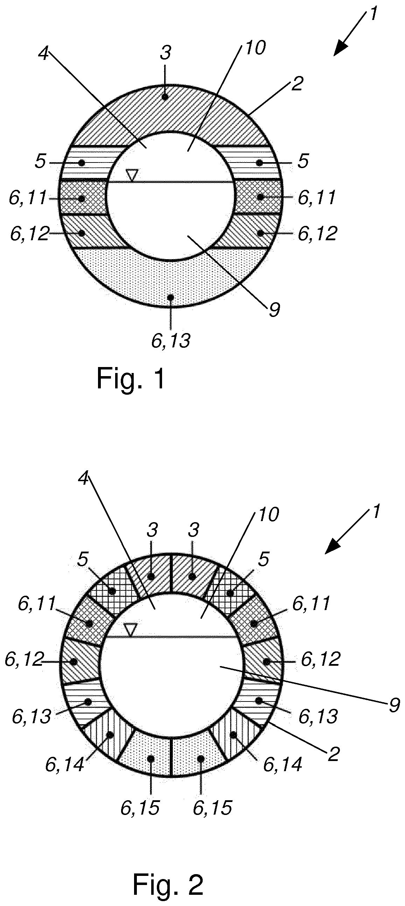

Die Fig. 1 bis 12 zeigen zumindest Teile von bevorzugten Ausführungsformen eines Dampfspeichers 1 umfassend einen Speicherbehälter 2 und wenigstens einen ersten Latentwärmespeicher 3 mit einer ersten Phasenumwandlungstemperatur, wobei der Speicherbehälter 2 einen Speicherraum 4 zur Aufnahme einer Flüssigkeit 9 und Dampf 10 aufweist. Ein Dampfspeicher 1, auch Ruthsspeicher, Ruths-Dampfspeicher, Gefällespeicher oder Gleitdruckspeicher genannt, ist ein Speicher welcher dazu vorgesehen ist bei Bedarf Prozessdampf für einen industriellen Prozess bereitzustellen, und hierbei insbesondere als Puffer zu wirken. Der Dampfspeicher 1 umfasst einen Speicherbehälter 2 mit einem Speicherraum 4, wobei insbesondere der Speicherbehälter 2 den Speicherraum 4 im Wesentlichen vollständig umschließt. Der Speicherraum 4 ist zur Aufnahme einer Flüssigkeit 9 und eines Dampfes 10 der Flüssigkeit 9 vorgesehen, wobei die Flüssigkeit 9 insbesondere Wasser sein kann, wobei das Wirkprinzip aber auch für andere Flüssigkeiten als Wasser anwendbar ist. Wenn die Flüssigkeit 9 an deren Siedetemperatur ist kann die Flüssigkeit 9 auch als Siedeflüssigkeit bezeichnet werden.

In dem Speicherraum 4 bildet sich gemäß den Gesetzen der Thermodynamik ein Druck und eine Temperatur aus, bei welcher Flüssigkeit 9 und Dampf 10 im Wesentlichen im thermodynamischen Gleichgewicht sind. Der Dampf 10 kann daher insbesondere ein im Wesentlichen gesättigter Dampf 10 sein.

Bei einem Entleerungsvorgang des Dampfspeichers 1, bei welchem Dampf 10 aus dem Speicherbehälter 2 als Entleerungsstrom entnommen wird, sinkt üblicherweise auch der Druck und die Temperatur ab, wobei ein Teil der Flüssigkeit 9 verdampft und dadurch der entnommene Dampf 10 wieder ersetzt wird.

Der Dampfspeicher 1 kann insbesondere vor dem Entleerungsvorgang eine Anfangstemperatur und einen Anfangsdruck aufweisen.

Der Dampfspeicher 1 umfasst weiters wenigstens einen ersten Latentwärmespeicher 3 mit einer ersten Phasenumwandlungstemperatur. Der wenigstens eine erste Latentwärmespeicher 3 funktioniert durch die Speicherung der latenten Wärme von reversibler thermodynamischer Zustandsänderungen eines Phasenwechselmaterials. Derartige Phasenwechselmaterialien werden oftmals auch als PCM oder Phase-Changing-Material bezeichnet. Hierbei sind eine Vielzahl an Phasenwechselmaterialien mit unterschiedlichen Phasenumwandlungstemperaturen bekannt. Geeignete Phasenwechselmaterialien können insbesondere Polymere oder Salze sein.

Insbesondere kann der Phasenübergang eines ersten Phasenwechselmaterials des wenigstens einen ersten Latentwärmespeichers 3 bei der ersten Phasenumwandlungstemperatur stattfinden. Für den Fall, dass der Phasenübergang nicht an genau einer Temperatur, sondern in einem engen Temperaturbereich stattfindet, ist als Phasenumwandlungstemperatur die Mitte dieses Temperaturbereiches anzusehen.

Diese Zustandsänderungen können insbesondere der Phasenübergang des ersten Phasenwechselmaterials zwischen fest und flüssig sein. Die erste Phasenumwandlungstemperatur kann insbesondere eine Schmelztemperatur oder Erstarrungstemperatur des ersten Phasenwechselmaterials sein.

Alternativ kann vorgesehen sein, dass die Zustandsänderung der Übergang zwischen zwei festen Phasen des Phasenwechselmaterials ist, insbesondere eine Änderung in der Kristallstruktur.

Die erste Phasenumwandlungstemperatur kann insbesondere größer 100 °C, bevorzugt größer 150°C, besonders bevorzugt größer 200 °C, sein.

Vorgesehen ist, dass der wenigstens eine erste Latentwärmespeicher 3 eine erste Wärmeübertragungsfläche aufweist und über die erste Wärmeübertragungsfläche zumindest mittelbar mit dem Speicherraum 4 in thermischen Kontakt ist. Die erste Wärmeübertragungsfläche ist jene Fläche des wenigstens einen ersten Latentwärmespeichers 3, über welcher eine Wärmeübertragung zwischen dem wenigstens einen ersten Latentwärmespeicher 3 und dem Speicherraum 4 erfolgt.

Die erste Wärmeübertragungsfläche kann insbesondere eine dem Speicherraum 4 zugewandte Fläche des wenigstens einen ersten Latentwärmespeichers 3 sein. Der zumindest mittelbare thermische Kontakt des wenigstens einen ersten Latentwärmespeichers 3 mit dem Speicherraum 4 bedeutet, dass der wenigstens eine erste Latentwärmespeicher 3 unmittelbar mit dem Speicherraum 4 in Kontakt ist oder dass zwischen dem wenigstens einen ersten Latentwärmespeicher 3 und dem Speicherraum 4 eine ausreichend Wärme leitende Schicht angeordnet ist, sodass weiterhin ein Wärmeaustausch zwischen dem wenigstens einen ersten Latentwärmespeicher 3 und dem Speicherraum 4 möglich ist.

Bei dem Entleerungsvorgang des Dampfspeichers 1 sinkt die Temperatur in dem Speicherraum 4 auf die erste Phasenumwandlungstemperatur ab. Sobald die erste Phasenumwandlungstemperatur erreicht ist beginnt die Phasenumwandlung im ersten Latentwärmespeicher 3 und damit ein Entladevorgang bezüglich der in dem ersten Latentwärmespeicher 3 gespeicherten latenten Wärme, welche über die erste Wärmeübertragungsfläche an den Inhalt des Speicherraums 4 abgegeben wird. Durch den Entladevorgang des wenigstens einen ersten Latentwärmespeichers 3 wird die für die Verdampfung der Flüssigkeit 9 benötigte Wärmeenergie bereitstellt und die Temperatur und den Druck in dem Speicherraum 4 für die Dauer des Entladevorganges stabilisierst. Im Wesentlichen nach der vollständigen Entladung der latenten Wärme des wenigstens einen ersten Latentwärmespeichers 3 kann bei einem weiteren Entleerungsvorgang die Temperatur des Dampfspeichers 1 unter die erste Phasenumwandlungstemperatur absinken.

Vorgesehen ist, dass der wenigstens eine erste Latentwärmespeicher 3 eine Heizeinrichtung 7 aufweist, und dass der wenigstens eine erste Latentwärmespeicher 3 durch die Heizeinrichtung 7 unabhängig von einer Wärmeübertragung an der ersten Wärmeübertragungsfläche beheizbar ist. Die Heizeinrichtung 7 ist eine Einrichtung, welche dazu vorgesehen ist Wärmeenergie abzugeben oder direkt zu erzeugen. Durch die Heizeinrichtung 7 erfolgt eine von der Temperatur der Flüssigkeit 9 unabhängige Beheizung und Wiederaufladung des wenigstens einen ersten Latentwärmespeichers 3 mit Wärmeenergie, welche in dem wenigstens einen ersten Latentwärmespeicher 3 als latente Wärmeenergie gespeichert wird. Ein komplett entladener oder teilentladener erste Latentwärmespeicher 3 wirkt dabei als Pufferspeicher für die von der Heizeinrichtung 7 eingebrachten Wärmeenergie, da diese Wärmeenergie durch die Phasenumwandlung im Phasenwechselmaterial als latente Energie gespeichert wird, ohne dass es im Wesentlichen zu einem Anstieg der Temperatur des Latentwärmespeichers 3 kommt.

Dadurch ergibt sich der Vorteil, dass auch während des Entleerungsvorgangs des Dampfspeichers 1 gezielt Wärmeenergie in diesen eingebracht werden kann, um einen Abfall des Druckes beziehungsweise der Temperatur hinauszuzögern, diese konstant zu halten oder zu einem Anstieg des Druckes beziehungsweise der Temperatur zu führen. Weiters ergibt sich dadurch der Vorteil, dass Wärme aus Strom zu Zeiten von billigen Strompreisen gespeichert werden kann, welche dann zur Zeiten eines erhöhten Wärmebedarfs des Produktionsprozesses diesem zur Verfügung gestellt wird. Durch geeignete Regelung kann eine zeitliche Entkopplung von Wärmeproduktion und Wärmeverbrauch, sowie die Erzeugung von Wärme durch Strom zu Zeiten niedriger Strompreise realisiert werden. Weiters kann Wärmenergie über die Heizeinrichtungen 7 direkt den Latentwärmespeichern 3,5,6 zugeführt werden, ohne dass dafür Dampf 10 in den Speicherraum 4 eingebracht werden muss. Dadurch kann die Wiederaufladung der Latentwärmespeicher 3,5,6 mit latenter Wärmeenergie problemlos und laufend während des Betriebes erfolgen. Weiters ist es dadurch möglich, dass der Druck und die Temperatur während des Entleerungsvorgangs im Wesentlichen stabil gehalten werden kann und nicht mehr zwingend abfallen muss. Dadurch kann ein derartiger Dampfspeicher 1 einfacher in einen komplexen industriellen Prozess eingesetzt werden. Weiters kann dadurch der Dampfspeicher 1 kleiner ausgebildet werden, da weniger Volumen für die Wärmespeicherung benötigt wird, wodurch auch die Leistungsdichte und die Effizienz des Dampfspeichers 1 erhöht wird.

Weiters ist ein Verfahren zum Betreiben des Dampfspeichers 1 umfassend den Speicherbehälter 2 und wenigstens den ersten Latentwärmespeicher 3 mit der ersten Phasenumwandlungstemperatur vorgesehen, wobei der Speicherraum 4 am Anfang eines Entleerungsvorganges mit einer Flüssigkeit 9 und Dampf 10 befüllt ist, wobei während des Entleerungsvorganges Dampf 10 aus dem Speicherraum 4 entnommen wird und die Flüssigkeit 9 verdampft, wobei bei Erreichen der ersten Phasenumwandlungstemperatur latente Wärmeenergie von dem wenigstens einen ersten Latentwärmespeicher 3 zum Verdampfen der Flüssigkeit 9 abgegeben wird, wobei der wenigstens eine erste Latentwärmespeicher 3 unabhängig von einer Wärmeübertragung mit dem Speicherraum 4 von einer Heizeinrichtung 7 beheizt wird.

Der Speicherbehälter 2 kann insbesondere als Druckbehälter ausgebildet sein. Der Speicherbehälter 2 kann insbesondere für einen Maximaldruck größer 10 bar, insbesondere größer 30 bar, besonders bevorzugt größer 100 bar, ausgebildet sein.

Der Speicherbehälter 2 kann bevorzugt im Wesentlichen zylinderförmig sein, insbesondere mit ebenen oder abgerundeten, bevorzugt halbkugel- oder korbbodenförmigen, Enden.

Der Speicherbehälter 2 kann weiters von einer Isolierschicht 18 umgeben sein. Die Isolierschicht 18 weist eine geringe Wärmeleitfähigkeit auf. Bevorzugt kann die Isolierschicht 18 sowohl den Speicherraum 4 als auch sämtliche Latentwärmespeicher 3,5 umschließen.

Der Speicherbehälter 2 kann weiters eine von dem Speicherraum 4 aus dem Speicherbehälter 2 führende Entladeleitung 27 aufweisen, durch welche der Dampf 10 beim Entleerungsvorgang aus dem Speicherbehälter 2 austreten kann. Die Entladeleitung 27 kann bevorzugt vorgebbar verschließbar sein. Ein freies Ende der Entladeleitung 27 in dem Speicherraum 4 kann insbesondere oberhalb eines maximalen Füllstandes der Flüssigkeit angeordnet sein.

Weiters kann vorgesehen sein, dass der Speicherbehälter 2 über eine Beladeleitung verfügt, über welche Dampf 10 in den Speicherraum 4 eingebracht werden kann.

Der Beladevorgang des Dampfspeichers 1 kann insbesondere mittels Dampf 10 erfolgen. Der Dampf 10 kondensiert und der Füllstand wie auch der Druck und die Temperatur in dem Speicherraum 4 wird erhöht. Der Dampfspeicher 1 kann solange beladen werden bis ein maximaler Füllstand oder ein maximaler Druck erreicht ist. Während des Beladevorganges des Dampfspeichers 1 gibt der Dampf 10 beziehungsweise die Flüssigkeit 9 je nach Wärme an die Latentwärmespeicher 3,5,6 ab.

Des Weiteren kann Flüssigkeit 9 in den Speicherraum 4 eingebracht werden, um den Füllstand an Flüssigkeit 9 wieder anzuheben.

Weiters kann vorgesehen sein, dass der Speicherbehälter 2 über einen Flüssigkeitszulaufleitung verfügt, über welche Flüssigkeit 9 in den Speicherraum 4 eingebracht werden kann.

Weiters kann auch einfach neuer Dampf 10 mit ähnlicher Temperatur wie die Flüssigkeit 9 im Speicherraum 4 während des Betriebes nachgefüllt werden, da der Dampf 10 nicht mehr die Hauptaufgabe der Wärmezufuhr für den Dampfspeicher 1 trägt.

Besonders bevorzugt kann vorgesehen sein, dass der Dampfspeicher 1 weiters wenigstens einen zweiten Latentwärmespeicher 5 mit einer zweiten Phasenumwandlungstemperatur aufweist, dass der wenigstens eine zweite Latentwärmespeicher 5 eine zweite Wärmeübertragungsfläche aufweist und über die zweite Wärmeübertragungsfläche zumindest mittelbar mit dem Speicherraum 4 in thermischen Kontakt ist, und dass die erste Phasenumwandlungstemperatur höher ist als die zweite Phasenumwandlungstemperatur. Bei dem Verfahren kann vorgesehen sein, dass der Dampfspeicher 1 den wenigstens einen zweiten Latentwärmespeicher 5 mit der zweiten Phasenumwandlungstemperatur umfasst, wobei die erste Phasenumwandlungstemperatur höher ist als die zweite Phasenumwandlungstemperatur, wobei bei Erreichen der zweiten Phasenumwandlungstemperatur latente Wärmeenergie von dem wenigstens einen zweiten Latentwärmespeicher 5 zum Verdampfen der Flüssigkeit 9 abgegeben wird. Der wenigstens eine zweite Latentwärmespeicher 5 funktioniert bevorzugt nach dem selben Prinzip wie der wenigstens eine erste Latentwärmespeicher 3. Die zweite Wärmeübertragungsfläche ist jene Fläche des wenigstens einen zweiten Latentwärmespeichers 5, über welcher eine Wärmeübertragung zwischen dem wenigstens einen zweiten Latentwärmespeicher 5 und dem Speicherraum 4 erfolgt. Die zweite Wärmeübertragungsfläche kann insbesondere eine dem Speicherraum 4 zugewandte Fläche des wenigstens einen zweiten Latentwärmespeichers 5 sein. Der wenigstens eine zweite Latentwärmespeicher 3 kann insbesondere ein zweites Phasenwechselmaterial aufweisen. Der Phasenübergang des wenigstens einen zweiten Latentwärmespeichers 5 findet bei der zweiten Phasenumwandlungstemperatur statt, wobei die zweite Phasenumwandlungstemperatur niedriger ist als die erste Phasenumwandlungstemperatur des wenigstens einen ersten Latentwärmespeichers 3.

Bei dem Entleerungsvorgang des Dampfspeichers 1 findet daher zuerst ein Entladevorgang des wenigstens einen ersten Latentwärmespeichers 3 bei der ersten Phasenumwandlungstemperatur statt. Nach Abschluss des Entladevorgangs des wenigstens einen ersten Latentwärmespeichers 3 sinkt bei weiterer Entnahme des Dampfes 10 die Temperatur im Speicherraum 4 auf die zweite Phasenumwandlungstemperatur ab, wodurch der Entladevorgang des wenigstens einen zweiten Latentwärmespeichers 5 beginnt. Dadurch erfolgt die Stabilisierung des Druckes und der Temperatur nicht mehr bei lediglich einer einzigen Phasenumwandlungstemperatur, sondern kann beim Entleerungsvorgang des Dampfspeichers 1 auf mehrere Phasenumwandlungstemperaturen aufgeteilt werden.

Dadurch ergibt sich der Vorteil, dass durch die unterschiedlichen Phasenumwandlungstemperaturen der Latentwärmespeicher 3,5 der Dampfspeicher 1 in einem größeren Temperaturbereich in der Lage ist Wärmeenergie in den Latentwärmespeichern 3,5 zwischenzuspeichern. Dadurch sinkt bei der Entnahme des Dampfes 10 der Druck und die Temperatur wesentlich gleichmäßiger ab, da die gespeicherte Wärme aufgeteilt bei mehreren Phasenumwandlungstemperaturen abgegeben wird, wodurch die Prozesssteuerung mit einem derartigen Dampfspeicher 1 vereinfacht wird. Weiters geben dadurch die Latentwärmespeicher 3,5 hintereinander deren latente Wärmeenergie an den Speicherraum 4 ab, wodurch es möglich ist durch eine unterschiedliche Anordnung der Latentwärmespeicher 3,5 nach deren Phasenumwandlungstemperaturen die Energieeffizienz des Dampfspeichers 1 zu erhöhen.

Die erste Phasenumwandlungstemperatur kann insbesondere um mindestens 1°C, insbesondere mindestens 5°C, bevorzugt mindestens 20°C, höher sein als die zweite Phasenumwandlungstemperatur.

Der Dampfspeicher 1 kann insbesondere mehrere erste Latentwärmespeicher 3 aufweisen, welche dieselbe erste Phasenumwandlungstemperatur aufweisen.

Der Dampfspeicher 1 kann insbesondere mehrere zweite Latentwärmespeicher 5 aufweisen, welche dieselbe zweite Phasenumwandlungstemperatur aufweisen.

Bevorzugt kann der wenigsten eine erste Latentwärmespeicher 3 direkt an dem wenigsten einen zweiten Latentwärmespeicher 5 angrenzen. Dadurch kann eine besonders kompakte Bauweise des Dampfspeichers 1 realisiert werden.

Weiters kann vorgesehen sein, dass der wenigstens eine zweite Latentwärmespeicher 5 ebenfalls eine Heizeinrichtung 7 aufweist, und dass der wenigstens eine zweite Latentwärmespeicher 5 durch die Heizeinrichtung 7 unabhängig von einer Wärmeübertragung an der zweiten Wärmeübertragungsfläche beheizbar ist. Dadurch kann ebenfalls der wenigstens eine zweite Latentwärmespeicher 5 beheizt werden.

Der Dampfspeicher 1 kann insbesondere mehrere in unterschiedlichen Latentwärmespeichern 3,5 angeordnete Heizeinrichtungen aufweisen 7.

Insbesondere kann jeder Latentwärmespeicher 3,5 eine eigene Heizeinrichtung 7 aufweisen.

Besonders bevorzugt kann vorgesehen sein, dass die Heizeinrichtung 7 des wenigstens einen ersten Latentwärmespeichers 3 unabhängig von der Heizeinrichtung 7 des wenigstens einen zweiten Latentwärmespeichers 5 beheizbar ist. Die Heizeinrichtungen 7 von Latentwärmespeicher 3,5,6 mit unterschiedlicher Phasenumwandlungstemperatur können daher unabhängig voneinander betrieben werden. Dadurch kann ausgewählt werden, welcher Latentwärmespeicher 3,5,6 mit welcher Phasenumwandlungstemperatur beheizt wird, und in Folge auch welche Temperatur bei welchem Druck der entnommene Dampf 10 des Dampfspeichers 1 haben wird.

Beim Entleerungsvorgang des Dampfspeichers 1 sinkt üblicherweise der Füllstand der Flüssigkeit 9, welcher in den Fig. 1 bis 12 durch ein kopfstehendes Dreieck symbolisiert wird, wegen der anhaltenden Verdampfung der Flüssigkeit 9 ab. Der Füllstand gibt hierbei die Höhe der Grenzfläche zwischen der Flüssigkeit 9 und dem Dampf 10 innerhalb des Speicherraumes 4 an. Da eine Wärmeübertragung zwischen den Latentwärmespeichern 3,5 mit der Flüssigkeit 9 anders ist als mit dem Dampf 10, kommt es zu einer Veränderung der Wärmeübertragung zwischen einem Latentwärmespeicher 3,5 und dem Speicherraum 4, wenn der Füllstand der Flüssigkeit 9 unterhalb der Wärmeübertragungsfläche des gerade entladenden Latentwärmespeichers 3,5 absinkt. Diese Veränderung der Wärmeübertragung zwischen den Latentwärmespeichern 3,5 und dem Speicherraum 4 können störend für die Prozessführung sein.

Besonders bevorzugt kann daher vorgesehen sein, dass der wenigstens eine erste Latentwärmespeicher 3 - in Betriebslage des Dampfspeichers 1 - höher angeordnet als der wenigstens eine zweite Latentwärmespeicher 5. Die Betriebslage des Dampfspeichers 1 ist jene Lage und/oder Orientierung des Dampfspeichers 1, welche beim Betrieb des Dampfspeichers 1 vorgesehen ist, wobei in der Betriebslage die Flüssigkeit 9 unten und der Dampf 10 in dem Speicherraum 4 angeordnet sind. Die höhere Anordnung des wenigstens einen ersten Latentwärmespeichers 3 gegenüber dem wenigstens einen zweiten Latentwärmespeicher 5 kann insbesondere bedeuten, dass ein tiefster Punkt der zweiten Wärmeübertragungsfläche tiefer angeordnet ist als ein tiefster Punkt der ersten Wärmeübertragungsfläche. Dadurch kann eine im Wesentlichen gleichbleibende Wärmeübertragung zwischen den Latentwärmespeichern 3,5 und der Flüssigkeit 9 erreicht werden, da die Höhe des gerade entladenden Latentwärmespeichers 3,5 mit absinkender Temperatur und absinkendem Füllstand ebenfalls abnimmt. Dies ist besonders vorteilhaft in Kombination mit der Verwendung der Heizeinrichtungen 7, da hier der Füllstand sehr stark absinken kann.

In Betriebslage eines im Wesentlichen zylinderförmigen Speicherbehälters 2 kann insbesondere eine Rotationsachse horizontal angeordnet sein. Durch diese liegende Anordnung kann einfacher eine große Grenzfläche zwischen Flüssigkeit 9 und Dampf 10 erreicht werden wie bei einem stehenden zylinderförmigen Speicherbehälter 2.

Gemäß einer nicht dargestellten Ausführungsform kann vorgesehen sein, dass der Dampfspeicher 1 als Latentwärmespeicher 3,5 lediglich den wenigstens einen ersten Latentwärmespeicher 3 und den wenigstens einen zweiten Latentwärmespeicher 5 aufweist.

Insbesondere kann vorgesehen sein, dass der Dampfspeicher 1 weiters weitere Latentwärmespeicher 6 mit weiteren Phasenumwandlungstemperaturen aufweist, dass die weiteren Latentwärmespeicher 6 weitere Wärmeübertragungsflächen aufweisen und über die weiteren Wärmeübertragungsflächen zumindest mittelbar mit dem Speicherraum 4 in thermischen Kontakt sind, und dass die weiteren Phasenumwandlungstemperaturen niedriger sind als die zweite Phasenumwandlungstemperatur. Die weiteren Latentwärmespeicher 6 funktionieren ebenfalls nach dem selben Prinzip wie der erste Latentwärmespeicher 3 oder der zweite Latentwärmespeicher 5. Die weiteren Latentwärmespeicher 6 können insbesondere auch zueinander abfallende Phasenumwandlungstemperaturen aufweisen. Dadurch erfolgt die Stabilisierung des Druckes und der Temperatur nicht mehr bei lediglich einer einzigen Phasenumwandlungstemperatur, sondern kann beim Entleerungsvorgang des Dampfspeichers 1 auf eine Vielzahl an Phasenumwandlungstemperaturen aufgeteilt werden. Weiters können dadurch die Latentwärmespeicher 3,5,6 noch besser derart angeordnet werden, dass bei einem Entleerungsvorgang des Dampfspeichers 1 trotz Absinken des Füllstandes der Flüssigkeit 9 eine gute Wärmeübertragung der Flüssigkeit 9 mit einem Latentwärmespeicher 3,5,6 mit einer ähnlich hohen Phasenumwandlungstemperatur wie die aktuelle Temperatur des Speicherraumes 4 möglich ist.

Insbesondere kann vorgesehen sein, dass auch die weiteren Latentwärmespeicher 6 eine Heizeinrichtung 7 aufweisen, und dass die weiteren Latentwärmespeicher 6 durch die Heizeinrichtung 7 unabhängig von einer Wärmeübertragung an den weiteren Wärmeübertragungsfläche beheizbar sind.

Insbesondere können mehrere Latentwärmespeicher 3,5,6 mit verschiedenen Phasenwechselmaterialien mit unterschiedlichen Phasenumwandlungstemperaturen entlang eines Querschnittes des Dampfspeichers 1 in Abhängigkeit vom erwarteten Füllstand im Dampfspeichers 1 angebracht werden. Die Latentwärmespeicher 3,5,6 können insbesondere gemäß deren Phasenumwandlungstemperaturen und in Abhängigkeit des Füllstandes während des Entleerungsvorganges angeordnet sein.

Besonders bevorzugt kann die von dem Latentwärmespeicher 3,5,6, welche die Flüssigkeit 9 im Dampfspeichers 1 zu einem bestimmten Zeitpunkt während der Entladung umgeben, abgegebene Wärmemenge so groß sein um den Temperaturverlust auf Grund des in dem Zeitpunkt austretenden Entleerungsmassenstroms näherungsweise auszugleichen zu können.

Die Latentwärmespeicher 3,5,6 können insbesondere derart angeordnet sein, dass deren Phasenumwandlungstemperaturen mit dem sinkenden Füllstand und sinkenden Temperatur während des Entleerungsvorganges des Dampfspeichers 1 abnimmt. Insbesondere kann der Latentwärmespeicher 3,5,6 mit der höchsten Phasenumwandlungstemperatur, also der erste Latentwärmespeicher 3,5,6, in einem oberen Bereich des Dampfspeichers 1 angebracht sein, wobei mit sinkender Höhe auch die Phasenumwandlungstemperaturen des jeweiligen in der Höhe angeordneten Latentwärmespeichers 3,5,6 so abnimmt, dass sich in einem untersten Bereich des Dampfspeichers 1 der Latentwärmespeicher 3,5,6 mit dem niedrigsten Schmelzpunkt befindet.

Die Fig. 1 bis 6 zeigen verschiedene bevorzugte Anordnungen der Latentwärmespeicher 3,5,6. Die vorhandenen Heizeinrichtungen 7 sind in Fig. 1 bis 6 nicht dargestellt.

In Fig. 1 ist die erste bevorzugte Ausführungsform des Dampfspeichers 1 dargestellt, welche als weitere Latentwärmespeicher 6 wenigstens einen dritten Latentwärmespeicher 6,11, wenigstens einen vierten Latentwärmespeicher 6,12 und wenigstens einen fünften Latentwärmespeicher 6,13 aufweist. Die jeweilige Phasenumwandlungstemperatur nimmt vom dritten Latentwärmespeicher 6,11 zum fünften Latentwärmespeicher 6,13 ab.

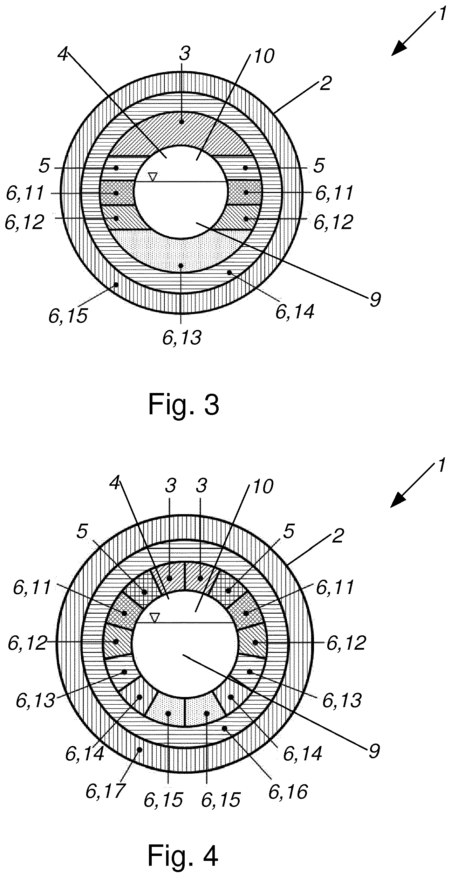

In Fig. 2 sowie Fig. 3 sind die zweite und dritte bevorzugte Ausführungsformen des Dampfspeichers 1 dargestellt, welche als weitere Latentwärmespeicher 6 zusätzlich noch wenigstens einen sechsten Latentwärmespeicher 6,14 und wenigstens einen siebenten Latentwärmespeicher 6,15 aufweist. Auch hier nimmt die Phasenumwandlungstemperatur des jeweiligen weiteren Latentwärmespeichers 6 mit der Höhe der Ziffer des jeweiligen weiteren Latentwärmespeichers 6 ab.

In Fig. 4 ist die vierte bevorzugte Ausführungsform des Dampfspeichers 1 dargestellt, welche als weitere Latentwärmespeicher 6 zusätzlich noch wenigstens einen achten Latentwärmespeicher 6,16 und wenigstens einen neunten Latentwärmespeicher 6,17 aufweist. Auch hier nimmt die Phasenumwandlungstemperatur von dem ersten Latentwärmespeicher 3 zu dem neunten Latentwärmespeicher 6,17 stetig ab.

Insbesondere können mehrere, insbesondere alle, Latentwärmespeicher 3,5,6 eine den Speicherraum 4 umgebende Schale ausbilden.

Insbesondere kann vorgesehen sein, dass die Latentwärmespeicher 3,5,6 den Speicherraum 4 wie ein Zylindermantel, insbesondere vollständig, umgeben. Dadurch kann eine kompakte und einfache Bauweise ermöglicht werden. In den Fig. 1 bis 11 ist der Speicherraum 4 kreiszylinderförmig ausgebildet, wodurch der Querschnitt des Speicherraumes 4 ein Kreis ist. Die Latentwärmespeicher 3,5,6 bilden dabei im Querschnitt zusammen einen konzentrischen Ring um den Speicherraum 4 auf.

Alternativ können die Latentwärmespeicher 3,5,6 im Speicherraum 4 angeordnet sein.

Bevorzugt kann vorgesehen sein, dass in Betriebslage eine Grenze zwischen wenigstens zwei Latentwärmespeicher 3,5,6 mit unterschiedlichen Phasenumwandlungstemperaturen horizontal verläuft. Dadurch verläuft diese Grenze parallel zu dem Füllstand der Flüssigkeit 9. Eine derartige Anordnung ist in den Fig. 1 und 3 dargestellt.

Weiters kann vorgesehen sein, dass in Betriebslage eine Grenze zwischen wenigstens zwei Latentwärmespeicher 3,5,6 mit unterschiedlichen Phasenumwandlungstemperaturen radial, also entlang einer von einer Mitte des Speicherraumes 4 ausgehenden Linie, verläuft. Insbesondere bei einem im Wesentlichen zylindrischen Speicherbehälter 2 kann dadurch die Anordnung der Latentwärmespeicher 3,5,6 einfach realisiert werden.

Insbesondere können die Latentwärmespeicher 3,5,6 einen im Wesentlichen gleichen Querschnitt aufweisen.

Weiters kann vorgesehen sein, dass die Latentwärmespeicher 3,5,6 in Schalen mit unterschiedlichem Abstand zu dem Speicherraum 4 angeordnet sind.

Bevorzugt kann vorgesehen sein, dass der wenigstens eine erste Latentwärmespeicher 3 zwischen dem Speicherraum 4 und einem der Latentwärmespeicher 5,6 mit einer niedrigeren Phasenumwandlungstemperatur als die erste Phasenumwandlungstemperatur angeordnet ist. Der Latentwärmespeicher 5,6 mit einer niedrigeren Phasenumwandlungstemperatur als die erste Phasenumwandlungstemperatur ist daher an einer dem Speicherraum 4 abgewandten Seite des wenigstens einen ersten Latentwärmespeichers 3 angeordnet. Bei einem Entleerungsvorgang des Dampfspeichers 1 wird daher zuerst der dem Speicherraum 4 näher angeordnete Latentwärmespeicher 3 entladen und erst anschließend die weiter außen angeordnete Latentwärmespeicher 5,6. Dadurch können insgesamt die Wärmeverluste verringert werden.

Gemäß einer nicht dargestellten Ausführungsform der erste Latentwärmespeicher 3 eine innere Schale ausbilden, und der zweite Latentwärmespeicher 5 als äußere Schale um die innere Schale angeordnet sein.

Besonders bevorzugt kann vorgesehen sein, dass mehrere Latentwärmespeicher 3,5,6 mit unterschiedlichen Phasenumwandlungstemperaturen die innere Schale ausbilden, und wenigstens ein weiterer Latentwärmespeicher 6 als äußere Schale um die innere Schale angeordnet ist. Diese in Fig. 3 und 4 gezeigte Anordnung hat den Vorteil, dass die Wärmeverluste der Latentwärmespeicher 3,5,6 in der inneren Schale gering gehalten werden.

Alternativ kann vorgesehen sein, dass wenigstens einer der Latentwärmespeicher 5,6 mit einer niedrigeren Phasenumwandlungstemperatur als die erste Phasenumwandlungstemperatur zwischen dem Speicherraum 4 und dem wenigstens einen ersten Latentwärmespeicher 3 angeordnet ist. Insbesondere können mehrere Latentwärmespeicher 5,6 mit unterschiedlichen Phasenumwandlungstemperaturen die innere Schale ausbilden, und der wenigstens eine erste Latentwärmespeicher 3 als äußere Schale um die innere Schale angeordnet sein. Dadurch umgibt der Latentwärmespeicher 3 mit der höchsten Phasenumwandlungstemperatur die anderen Latentwärmespeicher 5,6 und kann diesen an einer dem Speicherraum 4 abgewandten Seite Wärmeenergie zuführen, um einen Entladevorgang der anderen Latentwärmespeicher 5,6 zu stabilisieren.

Bevorzugt kann vorgesehen sein, dass der wenigstens eine erste Latentwärmespeicher 3 und/oder der wenigstens eine zweite Latentwärmespeicher 5 innerhalb des Speicherbehälters 2 angeordnet sind. Insbesondere können sämtliche Latentwärmespeicher 3,5,6 innerhalb des Speicherbehälters 2 angeordnet sein. Insbesondere kann dadurch eine hohe Wärmeübertragung zwischen den Latentwärmespeichern 3,5,6 und dem Inhalt des Speicherraums 4 erreicht werden.

Bevorzugt kann vorgesehen sein, dass der wenigstens eine erste Latentwärmespeicher 3 innerhalb des Speicherbehälters 2 angeordnet ist. Weiters kann der wenigstens eine zweite Latentwärmespeicher 5 innerhalb des Speicherbehälters 2 angeordnet sein. Insbesondere kann dadurch eine hohe Wärmeübertragung zwischen den Latentwärmespeichern 3,5,6 und dem Inhalt des Speicherraums 4 erreicht werden.

Der Speicherraum 4 und die Latentwärmespeicher 3,5,6 können, um die Reinheit des Dampfes 10 sicherzustellen, mit Hilfe einer dünnen Trennschicht 26 aus einem Material mit hoher Wärmeleitfähigkeit voneinander getrennt sein.

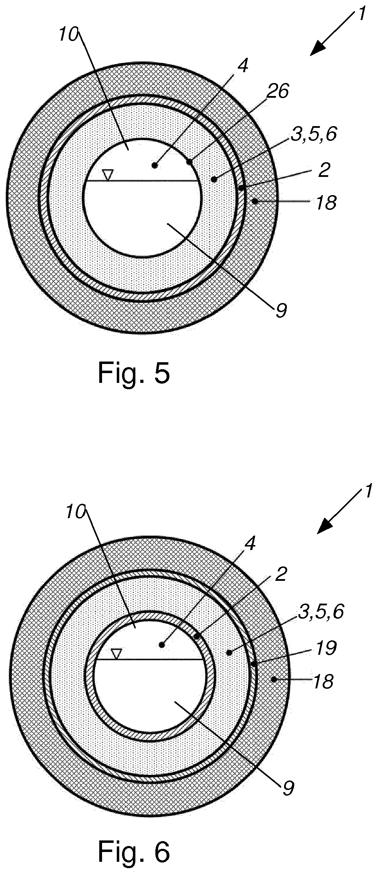

Besonders bevorzugt kann vorgesehen sein, dass der wenigstens eine erste Latentwärmespeicher 3 an einer Innenwandung des Speicherbehälters 2 angeordnet ist. Weiters kann vorgesehen sein, dass der wenigstens eine zweite Latentwärmespeicher 5 an einer Innenwandung des Speicherbehälters 2 angeordnet ist. Insbesondere können sämtliche Latentwärmespeicher 3,5,6 an der Innenwandung des Speicherbehälters 2 angeordnet sein. Weiters können die Latentwärmespeicher 3,5,6 zwischen der Trennschicht 26 und der Innenwandung des Speicherbehälters 2 angeordnet sein. Dadurch kann eine besonders einfache und kompakte Bauweise erreicht werden. Eine derartige Bauweise ist in Fig. 5 dargestellt, wobei die verschiedenen Latentwärmespeicher 3,5,6 lediglich als eine homogene Fläche dargestellt werden.

Alternativ kann vorgesehen sein, dass der wenigstens eine erste Latentwärmespeicher 3 außen an dem Speicherbehälter 2 angeordnet ist. Weiters kann vorgesehen sein, dass der wenigstens eine zweite Latentwärmespeicher 5 außen an dem Speicherbehälter 2 angeordnet ist. Insbesondere können sämtliche Latentwärmespeicher 3,5,6 außen an dem Speicherbehälter 2 angeordnet sein. Zwischen den Latentwärmespeicher 3,5,6 und dem Speicherraum 4 ist hierbei die Behälterwand des Speicherbehälters 2 angeordnet. Zwischen dem Latentwärmespeicher 3,5,6 und der Isolierschicht 18 kann eine weitere Behälterwand 19 angeordnet sein. Diese Behälterwand 19 kann einen weiteren Speicherbehälter darstellen. Diese Anordnung hat den Vorteil, dass schon bestehende Dampfspeicher 1 einfach nachgerüstet werden können, solange das Material des Speicherbehälters 2 des bestehenden Dampfspeichers 1 eine gute Wärmeleitfähigkeit besitzt. Eine derartige Ausführungsform ist beispielhaft in Fig. 6 dargestellt.

Weiters sind die Latentwärmespeicher 3,5,6 als mit einem Phasenwechselmaterial gefüllte Kammern ausgebildet. Die Latentwärmespeicher 3,5 können hierbei insbesondere als Kammern ausgebildet sein, welche mit unterschiedlichen Phasenwechselmaterialien gefüllt sind.

Bevorzugt kann vorgesehen sein, dass die Phasenwechselmaterialien Nukleierungsmittel enthalten, um wenig Unterkühlung und/oder hohe Kristallinitätsgrade sicherzustellen.

Weiters kann vorgesehen sein, dass die wenigstens eine von dem Speicherraum 4 aus dem Speicherbehälter 2 führende Entladeleitung 27 durch den wenigstens einen ersten Latentwärmespeicher 3 führt. Weiters kann Entladeleitung 27 durch den wenigstens einen zweiten Latentwärmespeicher 5 führen. Beim Entleerungsvorgang des Dampfspeichers 1 kann es auf Grund einer hohen Entladegeschwindigkeit des Dampfes 10 und/oder einer geringen Wärmeleitfähigkeit der Latentwärmespeicher 3,5,6 zu einer höheren Temperatur in den Latentwärmespeichern 3,5,6 gegenüber dem Speicherraum 4 kommen. Daher ist es vorteilhaft die wenigstens eine Entladeleitung 27 des Dampfspeichers 1 so auszuführen, dass sie bevor sie den äußersten Speicherbehälter 2,19 verlässt mindestens einen Latentwärmespeicher 3,5,6 durchläuft und so dem Dampf 10 zusätzlich Wärme zugeführt wird und dadurch der Dampf 10 je nach Ausführung insbesondere überhitzt werden kann.

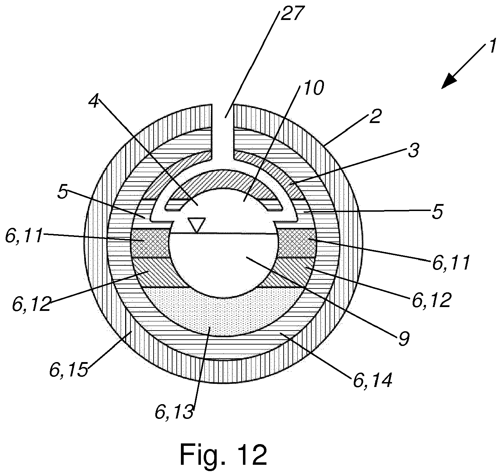

Dabei kann die wenigstens eine Entladeleitung 27 je nach Anordnung auch mehrere Latentwärmespeicher 3,5,6 durchlaufen bevor Sie den äußersten Speicherbehälter 2,19 verlässt. Eine derartige Ausführungsform ist beispielhaft in Fig. 12 dargestellt. Die Entladeleitung 27, kann durch an dem Speicherraum 4 angrenzenden Latentwärmespeichern 3,5,6 führen aber auch durch Latentwärmespeicher 3,5,6, welche in einer äußeren Schale angeordnet sind.

Weiters können mehrere Entladeleitungen 27 aus dem Speicherraum 4 durch mehrere unterschiedliche und/oder gleiche Latentwärmespeicher 3,5,6 geführt werden.

Weiters ist die Heizeinrichtung 7 komplett in dem wenigsten einen ersten Latentwärmespeicher 3 und/oder wenigsten einen zweiten Latentwärmespeicher 5 und/oder den weiteren Latentwärmespeicher 6 angeordnet, wodurch die von der Heizeinrichtung 7 bereitgestellte Wärmeenergie direkt innerhalb des jeweiligen beheizten Latentwärmespeichers 3,5,6 abgegeben wird. Dadurch kann die Beheizung des jeweiligen Latentwärmespeichers 3,5,6 besonders unmittelbar erfolgen.

Insbesondere kann vorgesehen sein, dass die Heizeinrichtung 7 elektrisch ist. Die Heizeinrichtung 7 wandelt daher elektrische Energie in Wärmeenergie um, entweder direkt in dem Phasenwechselmaterial des betreffenden Latentwärmespeichers 3,5,6 oder mittelbar. Dies ermöglicht eine unmittelbare und rasche Beheizung des jeweiligen Latentwärmespeichers 3,5,6.

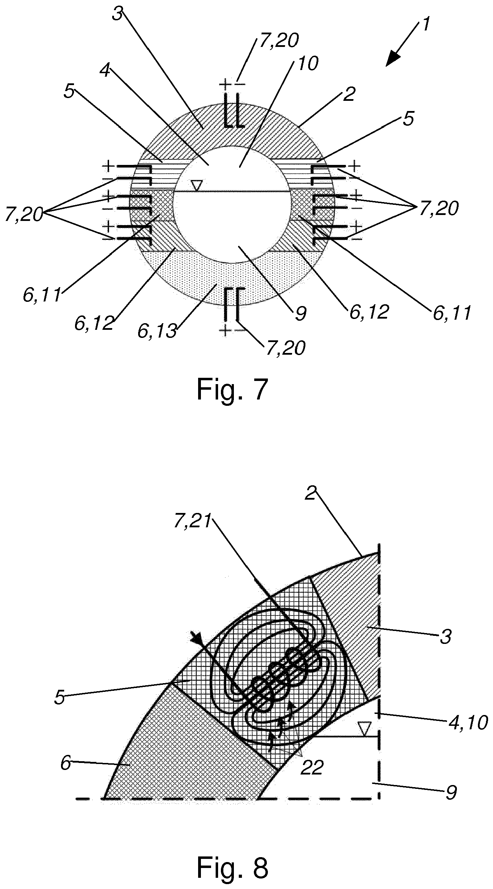

Bevorzugt kann vorgesehen sein, dass die Heizeinrichtung 7 Elektroden 20 umfasst. Die Elektroden 20 können in mindesten einem der Latentwärmespeicher 3,5,6 angeordnet sein. Beispielhaft wird in Fig.7 die Anordnung der Elektroden 20 bei einer Anordnung der Latentwärmespeicher 3,5,6 wie in Fig. 1 dargestellt. Prinzipiell kann Gleich- als auch Wechselstrom verwendet werden. Bei Wechselstrom gibt es dann aufgrund der drei Phasen auch mehrere Arten der Elektrodenverschaltung beispielsweise Stern- oder Dreieckschaltung. Mögliche Elektrodengeometrien sind insbesondere Spiral- oder Schneckengeometrien, planparallele Elektroden 20, Elektroden 20 mit unterschiedlichen Strukturen, insbesondere Löcher in planparallelen Elektroden 20, Elektroden 20 die gefaltet sind, um eine geeignete, unterschiedliche Verteilung des elektrischen Feldes herstellen zu können, wodurch das Phasenwechselmaterial auch inhomogen aufgeschmolzen werden kann.

Weiters kann vorgesehen sein, dass die Heizeinrichtung 7 induktiv ist. Hierbei kann vorgesehen sein, dass die Eigenschaften des Phasenwechselmaterials eine ausreichend hohe elektrische Leitfähigkeit aufweist. Durch die Zusammensetzung des Phasenwechselmaterials können auch andere wichtige Parameter beeinflusst werden wie beispielsweise die Eindringtiefe des elektromagnetischen Feldes. Zum induktiven Aufheizen, insbesondere Schmelzen, des Phasenwechselmaterials können geeignete verschiedene elektrische Stromkreise verwendet werden, die in verschiedenen Geometrien direkt im Phasenwechselmaterials aber auch außerhalb der Latentwärmespeicher 3,5,6 angebracht sein können. Solche Geometrien sind beispielsweise Spulen 20, Schnecken aus verschiedenen Elektrodenmaterialien mit unterschiedlichem Leitungsquerschnitt, Wicklungszahlen, Abständen und dergleichen. In Fig. 8 wird die Erzeugung eines elektromagnetischen Feldes beispielhaft mit einer vom Strom durchflossenen Induktionsspule 21 dargestellt. Mit Hilfe des entstehenden Induktionsstroms 22 wird das Phasenwechselmaterial aufgeschmolzen.

Die Eigenschaften der Phasenwechselmaterialien können durch die Zugabe von verschiedenen Zusätzen wie beispielsweise Metalle, Grafit, Keramik, magnetische Stoffe, derart modifiziert werden, dass das Phasenwechselmaterial schnell aufgeschmolzen werden kann.

Eine weitere Alternative der elektrischen Heizeinrichtung 7 kann weiters eine elektrische Widerstandsheizung sein.

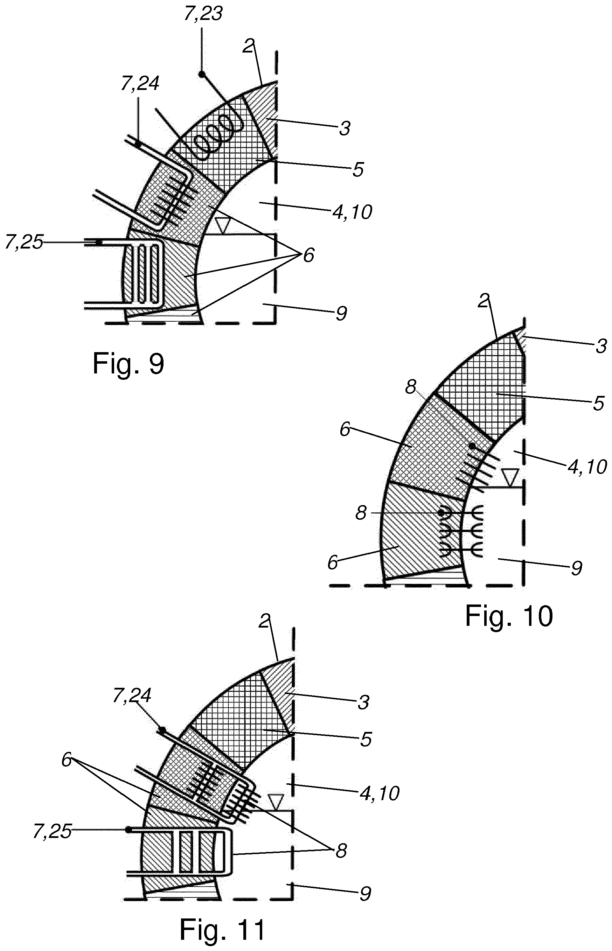

Weiters kann vorgesehen sein, dass die Heizeinrichtung 7 einen Rohrwärmeübertrager aufweist. Hierbei kann wenigstens ein Rohrwärmetauscher, welcher von einem Wärmeträgermedium wie Dampf, Öl, Druckwasser oder CO₂ durchflossen wird, in mindesten einen der Latentwärmespeicher 3,5,6 angeordnet sein. Dieses Wärmeträgermedium wird zuvor, insbesondere elektrisch, beheizt um das Phasenwechselmaterial aufzuschmelzen zu können. Der Rohrwärmetauscher kann insbesondere eine vergrößerte Oberfläche aufweisen, insbesondere durch Platten, Rippen, Pin-Fins und/oder Shell-Tubes. Als Rohrwärmetauscher kann insbesondere ein Spiralwärmeübertrager 23, ein Rippenrohr-Wärmeübertrager 24 und/oder ein Rohrbündelwärmeübertrager 25 verwendet werden. Unterschiedliche Ausbildungsformen eines derartigen Rohrwärmeübertragers sind in Fig. 9 und 11 beispielhaft dargestellt.

Insbesondere kann vorgesehen sein, dass sämtliche Heizeinrichtung 7 gleich ausgebildet sind.

Alternativ kann vorgesehen sein, dass unterschiedlich ausgebildete Heizeinrichtungen 7 vorgesehen sind. Insbesondere kann bei der Verwendung unterschiedlicher Phasenwechselmaterialien jeweils angepasste Heizeinrichtungen 7 verwendet werden, beispielsweise wenn einige Phasenwechselmaterialien nur schwer elektrisch beheizbar sind.

Insbesondere kann vorgesehen sein, dass die Wärmeübertragungsflächen der Latentwärmespeicher 3,5,6 eine vergrößerte Oberfläche aufweisen. Diese vergrößerte Oberfläche kann insbesondere durch Rippen oder eine gewellte Trennfläche erreicht werden.

Besonders bevorzugt kann vorgesehen sein, dass der wenigstens eine erste Latentwärmespeicher 3 Wärmeübertragerstrukturen 8 aufweist, und dass die Wärmeübertragerstrukturen 8 in den Speicherraum 4 hinein ragen. Insbesondere kann vorgesehen sein, dass auch der wenigstens eine zweite Latentwärmespeicher 5 und/oder die weiteren Latentwärmespeicher 6 Wärmeübertragerstrukturen 8 aufweisen. Die Wärmeübertragerstrukturen 8 sorgen für eine vergrößerte Oberfläche für die Wärmeübertragung zwischen den Latentwärmespeichern 3,5,6 und dem Speicherraum 4. Die Wärmeübertragerstrukturen 8 befindet sich sowohl in mindestens einer der Latentwärmespeicher 3,5,6 als auch im Speicherraum 4 des Dampfspeichers 1, wo diese in die Flüssigkeit 9 und/oder in den Dampf 10 hinein ragen, wodurch auch bei einer schlechten Wärmeleitfähigkeit des Phasenwechselmaterials eine gute Wärmeübertragung möglich ist. Als Material für diese Wärmeübertragerstrukturen 8 kann insbesondere ein gut Wärme leitendes Material, bevorzugt Kupfer oder Graphit, verwendet werden. Unterschiedliche Ausbildungen der Wärmeübertragerstrukturen 8 sind in Fig. 10 und 11 dargestellt.

Die Wärmeübertragerstrukturen 8 können insbesondere zwei Enden aufweisen, wobei ein erstes Ende innerhalb des jeweiligen Latentwärmespeichers 3,5,6 angeordnet ist und ein, dem ersten Ende gegenüberliegendes, zweites Ende innerhalb des Speicherraumes 4 angeordnet ist, wobei die Wärmeübertragerstrukturen 8 die Wärmeübertragungsflächen der jeweiligen Latentwärmespeicher 3,5,6 durchdringen.

Weiters kann insbesondere vorgesehen sein, dass die Enden der Wärmeübertragerstrukturen 8 sich aufzweigen, um nochmals die Kontaktfläche zu vergrößern.

Bevorzugt kann vorgesehen sein, dass die Wärmeübertragerstrukturen 8 Teil der Heizeinrichtungen 7 sind. Insbesondere können die Wärmeübertragerstrukturen 8 Teil der Rohrwärmeübertrager sein. Indem die Heizeinrichtungen 7 gleichzeitig in den Latentwärmespeicher 3,5,6 als auch im Speicherraum 4 angeordnet sind, können gleichzeitig die Latentwärmespeicher 3,5,6 und der Speicherraum 4 direkt beheizt werden. Insbesondere können die Rippenrohr-Wärmeübertrager 24 und/oder die Rohrbündelwärmeübertrager 25 derart ausgebildet sein, dass ein Teil in den Speicherraum 4 hinein ragt.

Grundsätzlich wäre ein Dampfspeicher 1 mit mehreren Latentwärmespeichern 3,5,6 mit unterschiedlicher Phasenumwandlungstemperatur auch ohne die Heizeinrichtung 7 möglich und Vorteilhaft, da sich bei der Entnahme des Dampfes 10 der Druck und die Temperatur wesentlich gleichmäßiger absenken würde, und hierfür eine Heizeinrichtung 7 vorteilhaft, aber nicht zwingend erforderlich ist. Ein derartiger Dampfspeicher 1 könnte als ein Dampfspeicher 1 umfassend einen Speicherbehälter 2 und wenigstens einen ersten Latentwärmespeicher 3 mit einer ersten Phasenumwandlungstemperatur bezeichnet werden, wobei der Speicherbehälter 2 einen Speicherraum 4 zur Aufnahme einer Flüssigkeit 9 und Dampf 10 aufweist, wobei der wenigstens eine erste Latentwärmespeicher 3 eine erste Wärmeübertragungsfläche aufweist und über die erste Wärmeübertragungsfläche zumindest mittelbar mit dem Speicherraum 4 in thermischen Kontakt ist, wobei der Dampfspeicher 1 weiters wenigstens einen zweiten Latentwärmespeicher 5 mit einer zweiten Phasenumwandlungstemperatur aufweist, wobei der wenigstens eine zweite Latentwärmespeicher 5 eine zweite Wärmeübertragungsfläche aufweist und über die zweite Wärmeübertragungsfläche zumindest mittelbar mit dem Speicherraum 4 in thermischen Kontakt ist, wobei die erste Phasenumwandlungstemperatur höher ist als die zweite Phasenumwandlungstemperatur. Dies könnte insbesondere mittels einem Verfahren zum Betreiben eines Dampfspeichers 1 umfassend einen Speicherbehälter 2, wenigstens einen ersten Latentwärmespeicher 3 mit einer ersten Phasenumwandlungstemperatur und wenigstens einen zweiten Latentwärmespeicher 5 mit einer zweiten Phasenumwandlungstemperatur erfolgen, wobei die erste Phasenumwandlungstemperatur höher ist als die zweite Phasenumwandlungstemperatur, wobei der Speicherraum 4 am Anfang eines Entleerungsvorganges mit einer Flüssigkeit 9 und Dampf 10 befüllt ist, wobei während des Entleerungsvorganges Dampf 10 aus dem Speicherraum 4 entnommen wird und die Flüssigkeit 9 verdampft, wobei bei Erreichen der ersten Phasenumwandlungstemperatur latente Wärmeenergie von dem wenigstens einen ersten Latentwärmespeicher 3 zum Verdampfen der Flüssigkeit 9 abgegeben wird, und bei Erreichen der zweiten Phasenumwandlungstemperatur latente Wärmeenergie von dem wenigstens einen zweiten Latentwärmespeicher 5 zum Verdampfen der Flüssigkeit 9 abgegeben wird. Dadurch ergibt sich der Vorteil, dass durch die unterschiedlichen Phasenumwandlungstemperaturen der Latentwärmespeicher 3,5 der Dampfspeicher 1 in einem größeren Temperaturbereich in der Lage ist Wärmeenergie in den Latentwärmespeichern 3,5 zwischenzuspeichern. Dadurch sinkt bei der Entnahme des Dampfes 10 der Druck und die Temperatur wesentlich gleichmäßiger ab, da die gespeicherte Wärme aufgeteilt bei mehreren Phasenumwandlungstemperaturen abgegeben wird, wodurch die Prozesssteuerung mit einem derartigen Dampfspeicher 1 vereinfacht wird. Weiters geben dadurch die Latentwärmespeicher 3,5 hintereinander deren latente Wärmeenergie an den Speicherraum 4 ab, wodurch es möglich ist durch eine unterschiedliche Anordnung der Latentwärmespeicher 3,5 nach deren Phasenumwandlungstemperaturen die Energieeffizienz des Dampfspeichers 1 zu erhöhen.

## Patentansprüche

1. Dampfspeicher (1) zum Bereitstellen von Prozessdampf für einen industriellen Prozess, wobei der Dampfspeicher (1) einen Speicherbehälter (2) und wenigstens einen ersten Latentwärmespeicher (3) mit einer ersten Phasenumwandlungstemperatur umfasst, wobei der Speicherbehälter (2) einen Speicherraum (4) zur Aufnahme einer Flüssigkeit (9) und Dampf (10) aufweist, wobei der wenigstens eine erste Latentwärmespeicher (3) als mit einem Phasenwechselmaterial gefüllte Kammer ausgebildet ist, wobei der wenigstens eine erste Latentwärmespeicher (3) eine erste Wärmeübertragungsfläche aufweist und über die erste Wärmeübertragungsfläche zumindest mittelbar mit dem Speicherraum (4) in thermischen Kontakt ist, wobei der wenigstens eine erste Latentwärmespeicher (3) eine Heizeinrichtung (7) aufweist, **dadurch gekennzeichnet, dass** die Heizeinrichtung (7) komplett in dem wenigsten einen ersten Latentwärmespeicher (3) angeordnet ist, und der wenigstens eine erste Latentwärmespeicher (3) durch die Heizeinrichtung (7) unabhängig von einer Wärmeübertragung an der ersten Wärmeübertragungsfläche beheizbar ist.

2. Dampfspeicher (1) nach Anspruch 1, **dadurch gekennzeichnet, dass** die Heizeinrichtung (7) elektrisch ist.

3. Dampfspeicher (1) nach einem der Ansprüche 1 bis 2, **dadurch gekennzeichnet, dass** die Heizeinrichtung (7) einen Rohrwärmeübertrager aufweist.

4. Dampfspeicher (1) nach einem der Ansprüche 1 bis 3, **dadurch gekennzeichnet, dass** der wenigstens eine erste Latentwärmespeicher (3) Wärmeübertragerstrukturen (8) aufweisen, und dass die Wärmeübertragerstrukturen (8) in den Speicherraum (4) hinein ragen.

5. Dampfspeicher (1) nach einem der Ansprüche 1 bis 4, **dadurch gekennzeichnet, dass** der Dampfspeicher (1) weiters wenigstens einen zweiten Latentwärmespeicher (5) mit einer zweiten Phasenumwandlungstemperatur aufweist, dass der wenigstens eine zweite Latentwärmespeicher (5) eine zweite Wärmeübertragungsfläche aufweist und über die zweite Wärmeübertragungsfläche zumindest mittelbar mit dem Speicherraum (4) in thermischen Kontakt ist, und dass die erste Phasenumwandlungstemperatur höher ist als die zweite Phasenumwandlungstemperatur.

6. Dampfspeicher (1) nach Anspruch 5, **dadurch gekennzeichnet, dass** der wenigstens eine zweite Latentwärmespeicher (5) ebenfalls eine Heizeinrichtung (7) aufweist, und dass der wenigstens eine zweite Latentwärmespeicher (5) durch die Heizeinrichtung (7) unabhängig von einer Wärmeübertragung an der zweiten Wärmeübertragungsfläche beheizbar ist.

7. Dampfspeicher (1) nach Anspruch 6, **dadurch gekennzeichnet, dass** die Heizeinrichtung (7) des wenigstens einen ersten Latentwärmespeichers (3) unabhängig von der Heizeinrichtung (7) des wenigstens einen zweiten Latentwärmespeichers (5) beheizbar ist.

8. Dampfspeicher (1) nach einem der Ansprüche 5 bis 7, **dadurch gekennzeichnet, dass** der wenigstens eine erste Latentwärmespeicher (3) - in Betriebslage des Dampfspeichers (1) - höher angeordnet als der wenigstens eine zweite Latentwärmespeicher (5).

9. Dampfspeicher (1) nach einem der Ansprüche 5 bis 8, **dadurch gekennzeichnet, dass** der Dampfspeicher (1) weiters weitere Latentwärmespeicher (6) mit weiteren Phasenumwandlungstemperaturen aufweist, dass die weiteren Latentwärmespeicher (6) weitere Wärmeübertragungsflächen aufweisen und über die weiteren Wärmeübertragungsflächen zumindest mittelbar mit dem Speicherraum (4) in thermischen Kontakt sind, und dass die weiteren Phasenumwandlungstemperaturen niedriger sind als die zweite Phasenumwandlungstemperatur.

10. Dampfspeicher (1) nach einem der Ansprüche 1 bis 9, **dadurch gekennzeichnet, dass** der wenigstens eine erste Latentwärmespeicher (3) innerhalb des Speicherbehälters (2) angeordnet ist.

11. Dampfspeicher (1) nach einem der Ansprüche 1 bis 10, **dadurch gekennzeichnet, dass** wenigstens eine von dem Speicherraum (4) aus dem Speicherbehälter (2) führende Entladeleitung (27) durch den wenigstens einen ersten Latentwärmespeicher (3) führt.

12. Verfahren zum Betreiben eines Dampfspeichers (1) zum Bereitstellen von Prozessdampf für einen industriellen Prozess, wobei der Dampfspeicher (1) einen Speicherbehälter (2) und wenigstens einen ersten Latentwärmespeicher (3) mit einer ersten Phasenumwandlungstemperatur umfasst, wobei der wenigstens eine erste Latentwärmespeicher (3) als mit einem Phasenwechselmaterial gefüllte Kammer ausgebildet ist, wobei der Speicherraum (4) am Anfang eines Entleerungsvorganges mit einer Flüssigkeit (9) und Dampf (10) befüllt ist, wobei während des Entleerungsvorganges Dampf (10) aus dem Speicherraum (4) entnommen wird und die Flüssigkeit (9) verdampft, wobei bei Erreichen der ersten Phasenumwandlungstemperatur latente Wärmeenergie von dem wenigstens einen ersten Latentwärmespeicher (3) zum Verdampfen der Flüssigkeit (9) abgegeben wird, **dadurch gekennzeichnet, dass** die Heizeinrichtung (7) komplett in dem wenigsten einen ersten Latentwärmespeicher (3) angeordnet ist, und der wenigstens eine erste Latentwärmespeicher (3) unabhängig von einer Wärmeübertragung mit dem Speicherraum (4) von einer Heizeinrichtung (7) beheizt wird.

13. Verfahren nach Anspruch 12, **dadurch gekennzeichnet, dass** der Dampfspeicher (1) wenigstens einen zweiten Latentwärmespeicher (5) mit einer zweiten Phasenumwandlungstemperatur umfasst, wobei die erste Phasenumwandlungstemperatur höher ist als die zweite Phasenumwandlungstemperatur, wobei bei Erreichen der zweiten Phasenumwandlungstemperatur latente Wärmeenergie von dem wenigstens einen zweiten Latentwärmespeicher (5) zum Verdampfen der Flüssigkeit (9) abgegeben wird.

## Claims

1. Steam accumulator (1) for providing process steam for an industrial process, wherein the steam accumulator (1) comprises an accumulator container (2) and at least one first latent heat accumulator (3) having a first phase transition temperature, wherein the accumulator container (2) has an accumulator space (4) for receiving a liquid (9) and steam (10), wherein the at least one first latent heat accumulator (3) is designed as a chamber filled with a phase change material, wherein the at least one first latent heat accumulator (3) has a first heat transfer surface and is in thermal contact at least indirectly with the accumulator space (4) via the first heat transfer surface, wherein the at least one first latent heat accumulator (3) has a heating device (7), **characterized in that** the heating device (7) is completely arranged in the at least one first latent heat accumulator (3), and the at least one first latent heat accumulator (3) can be heated by the heating device (7) independently of a heat transfer at the first heat transfer surface.

2. Steam accumulator (1) according to claim 1, **characterized in that** the heating device (7) is electric.

3. Steam accumulator (1) according to one of claims 1 to 2, **characterized in that** the heating device (7) has a tubular heat exchanger.

4. Steam accumulator (1) according to one of claims 1 to 3, **characterized in that** the at least one first latent heat accumulator (3) has heat exchanger structures (8), and **in that** the heat exchanger structures (8) project into the accumulator space (4).

5. Steam accumulator (1) according to one of claims 1 to 4, **characterized in that** the steam accumulator (1) further has at least one second latent heat accumulator (5) with a second phase transition temperature, **in that** the at least one second latent heat accumulator (5) has a second heat transfer surface and is in thermal contact with the accumulator space (4) at least indirectly via the second heat transfer surface, and **in that** the first phase transition temperature is higher than the second phase transition temperature.

6. Steam accumulator (1) according to claim 5, **characterized in that** the at least one second latent heat accumulator (5) also has a heating device (7), and **in that** the at least one second latent heat accumulator (5) can be heated by the heating device (7) independently of a heat transfer at the second heat transfer surface.

7. Steam accumulator (1) according to claim 6, **characterized in that** the heating device (7) of the at least one first latent heat accumulator (3) can be heated independently of the heating device (7) of the at least one second latent heat accumulator (5).

8. Steam accumulator (1) according to one of claims 5 to 7, **characterized in that** the at least one first latent heat accumulator (3), in the operating position of the steam accumulator (1), is arranged higher than the at least one second latent heat accumulator (5).

9. Steam accumulator (1) according to one of claims 5 to 8, **characterized in that** the steam accumulator (1) furthermore has further latent heat accumulators (6) with further phase transition temperatures, **in that** the further latent heat accumulators (6) have further heat transfer surfaces and are in thermal contact at least indirectly with the accumulator space (4) via the further heat transfer surfaces, and **in that** the further phase transition temperatures are lower than the second phase transition temperature.

10. Steam accumulator (1) according to one of claims 1 to 9, **characterized in that** the at least one first latent heat accumulator (3) is arranged inside the accumulator container (2).

11. Steam accumulator (1) according to one of claims 1 to 10, **characterized in that** at least one discharge line (27) leading from the accumulator space (4) out of the accumulator container (2) passes through the at least one first latent heat accumulator (3).

12. Method for operating a steam accumulator (1) for providing process steam for an industrial process, wherein the steam accumulator (1) comprises an accumulator container (2) and at least one first latent heat accumulator (3) having a first phase transition temperature, wherein the at least one first latent heat accumulator (3) is constructed as a chamber filled with a phase change material, wherein the accumulator space (4) is filled with a liquid (9) and steam (10) at the beginning of a discharging process, wherein steam (10) is removed from the accumulator space (4) during the discharging process and the liquid (9) evaporates, wherein when the first phase transition temperature is reached latent thermal energy is released from the at least one first latent heat accumulator (3) for evaporating the liquid (9), **characterized in that** the heating device (7) is completely arranged in the at least one first latent heat accumulator (3), and the at least one first latent heat accumulator (3) is heated by a heating device (7) independently of a heat transfer with the accumulator space (4).

13. Method according to claim 12, **characterized in that** the steam accumulator (1) comprises at least one second latent heat accumulator (5) having a second phase transition temperature, wherein the first phase transition temperature is higher than the second phase transition temperature, wherein latent heat energy is released from the at least one second latent heat accumulator (5) for evaporating the liquid (9) when the second phase transition temperature is reached.

## Revendications

1. Accumulateur de vapeur (1) pour la fourniture de vapeur de processus pour un processus industriel, lequel accumulateur de vapeur (1) comprend un réservoir d'accumulation (2) et au moins un premier accumulateur de chaleur latente (3) avec une première température de changement de phase, lequel réservoir d'accumulation (2) présente un espace d'accumulation (4) pour recevoir un liquide (9) et de la vapeur (10), dans lequel l'au moins un premier accumulateur de chaleur latente (3) est conformé comme une chambre remplie d'un matériau changeant de phase, dans lequel l'au moins un premier accumulateur de chaleur latente (3) présente une première surface de transfert thermique et est en contact thermique au moins indirect avec l'espace d'accumulation (4) par l'intermédiaire de la première surface de transfert thermique, dans lequel l'au moins un premier accumulateur de chaleur latente (3) présente une installation de chauffage (7), **caractérisé en ce que** l'installation de chauffage (7) est entièrement disposée dans l'au moins un premier accumulateur de chaleur latente (3) et l'au moins un premier accumulateur de chaleur latente (3) peut être chauffé par l'installation de chauffage (7) indépendamment d'un transfert thermique sur la première surface de transfert thermique.

2. Accumulateur de vapeur (1) selon la revendication 1, **caractérisé en ce que** l'installation de chauffage (7) est électrique.

3. Accumulateur de vapeur (1) selon l'une des revendications 1 à 2, **caractérisé en ce que** l'installation de chauffage (7) est un échangeur de chaleur tubulaire.

4. Accumulateur de vapeur (1) selon l'une des revendications 1 à 3, **caractérisé en ce que** l'au moins un premier accumulateur de chaleur latente (3) présente des structures de transfert thermique (8) et **en ce que** les structures de transfert thermique (8) dépassent vers l'intérieur de l'espace d'accumulation (4).

5. Accumulateur de vapeur (1) selon l'une des revendications 1 à 4, **caractérisé en ce que** l'accumulateur de vapeur (1) présente en outre au moins un deuxième accumulateur de chaleur latente (5) avec une deuxième température de changement de phase, **en ce que** l'au moins un deuxième accumulateur de chaleur latente (5) présente une deuxième surface de transfert thermique et est en contact thermique au moins indirect avec l'espace d'accumulation (4) par l'intermédiaire de la deuxième surface de transfert thermique et **en ce que** la première température de changement de phase est plus élevée que la deuxième température de changement de phase.

6. Accumulateur de vapeur (1) selon la revendication 5, **caractérisé en ce que** l'au moins un deuxième accumulateur de chaleur latente (5) présente également une installation de chauffage (7) et **en ce que** l'au moins un deuxième accumulateur de chaleur latente (5) peut être chauffé par l'installation de chauffage (7) indépendamment d'un transfert thermique sur la deuxième surface de transfert thermique.

7. Accumulateur de vapeur (1) selon la revendication 6, **caractérisé en ce que** l'installation de chauffage (7) de l'au moins un premier accumulateur de chaleur latente (3) peut être chauffée indépendamment de l'installation de chauffage (7) de l'au moins un deuxième accumulateur de chaleur latente (5).

8. Accumulateur de vapeur (1) selon l'une des revendications 5 à 7, **caractérisé en ce que** l'au moins un premier accumulateur de chaleur latente (3) est disposé, dans la position de fonctionnement de l'accumulateur de vapeur (1), plus haut que l'au moins un deuxième accumulateur de chaleur latente (5).

9. Accumulateur de vapeur (1) selon l'une des revendications 5 à 8, **caractérisé en ce que** l'accumulateur de vapeur (1) comprend en outre d'autres accumulateurs de chaleur latente (6) avec d'autres températures de changement de phase, **en ce que** les autres accumulateurs de chaleur latente (6) présentent d'autres surfaces de transfert thermique et sont en contact thermique au moins indirect avec l'espace d'accumulation (4) par l'intermédiaire des autres surfaces de transfert thermique et **en ce que** les autres températures de changement de phase sont plus basses que la deuxième température de changement de phase.

10. Accumulateur de vapeur (1) selon l'une des revendications 1 à 9, **caractérisé en ce que** l'au moins un premier accumulateur de chaleur latente (3) est disposé à l'intérieur du réservoir d'accumulation (2).

11. Accumulateur de vapeur (1) selon l'une des revendications 1 à 10, **caractérisé en ce qu'**au moins une conduite de décharge (27) sortant de l'espace d'accumulation (4) hors du réservoir d'accumulation (2) passe à travers l'au moins un premier accumulateur de chaleur latente (3).

12. Procédé pour la conduite d'un accumulateur de vapeur (1) pour fournir de la vapeur de processus pour un processus industriel, dans lequel l'accumulateur de vapeur (1) comprend un réservoir d'accumulation (2) et au moins un premier accumulateur de chaleur latente (3) avec une première température de changement de phase, lequel au moins un premier accumulateur de chaleur latente (3) est conçu comme une chambre remplie d'un matériau changeant de phase, dans lequel l'espace d'accumulation (4) est rempli d'un liquide (9) et de vapeur (10) au début d'une opération de vidange, dans lequel de la vapeur (10) est prélevée dans l'espace d'accumulation (4) et le liquide (9) s'évapore pendant l'opération de vidange, de l'énergie thermique latente étant libérée par l'au moins un premier accumulateur de chaleur latente (3) pour l'évaporation du liquide (9) lorsque la première température de changement de phase est atteinte, **caractérisé en ce que** l'installation de chauffage (7) est entièrement disposée dans l'au moins un premier accumulateur de chaleur latente (3), et l'au moins un premier accumulateur de chaleur latente (3) est chauffé par une installation de chauffage (7) indépendamment du transfert thermique avec l'espace d'accumulation (4).

13. Procédé selon la revendication 12, **caractérisé en ce que** l'accumulateur de vapeur (1) comprend au moins un deuxième accumulateur de chaleur latente (5) avec une deuxième température de changement de phase, laquelle première température de changement de phase est plus élevée que la deuxième température de changement de phase, de l'énergie thermique latente étant libérée par l'au moins un deuxième accumulateur de chaleur latente (5) pour l'évaporation du liquide (9) quand la deuxième température de changement de phase est atteinte.
